# EUROPEAN PATENT SPECIFICATION

(11) **EP 1 190 758 B1**
(45) Date of publication and mention of the grant of the patent: **28.04.2004**
(21) Application number: 01308151.8
(22) Date of filing: 25.09.2001
(51) Int. Cl.: B01D 53/22, H01M 8/06, C10L 3/10

(54) **Desulphurization of fuel gas for fuel cell systems using sulphur separating membranes**
Entschwefelung von Brennstoffen für Brennstoffzellensysteme mittels einer Schwefel Trennungsmembrane
Désulfuration d'un combustible gazeux pour systèmes de pile à combustible au moyen d'une membrane de séparation de soufre

(30) Priority: 25.09.2000 US 669784
(43) Date of publication of application: 27.03.2002
(73) Proprietor: Siemens Westinghouse Power Corporation, Orlando, FL 32826 (US)
(72) Inventor: Israelson, Gordon, Murrysville, PA 15668 (US)
(74) Representative: French, Clive Harry

(56) References cited:
- EP-A- 0 435 724
- EP-A- 0 481 813
- GB-A- 2 281 077
- GB-A- 2 289 286
- US-A- 3 534 528
- US-A- 5 769 909

## Description

The invention relates generally to fuel cell power generation systems operating on natural gas as a fuel, and a method to reduce sulphur content of the natural gas as it enters the fuel cell.

Fuel cell systems incorporating means to reduce sulphur content of feed fuel are well known and taught for example in U.S. Patent Specification No. 5,413,879 (Domeracki, et al.). There, natural gas or coal-derived fuel gas was pumped through a fuel pre-heater and then directed, at 400°C, to a desulphurizer containing a bed of sulphur sorbent, to reduce sulphur content to less than 0.1 ppm, after which it was then passed to a solid oxide fuel cell generator ("SOFC").

The term "ppm" means parts per million by volume throughout.

The use of untreated natural fuel gas, diesel fuel, sulphur-containing coal-derived fuel gas, or other sulphur-containing fuel gas, all herein defined as "sulphur-containing fuel gas", for fuel cell feed, has provided many problems including carbon deposition on many fuel cell generator components and sulphur degradation of the fuel electrode: While natural gas can contain low sulphur content, in most cases highly odorous sulphur compounds such as mercaptans are added to permit detection of gas leaks.

Reforming the fuel gas, defined as breaking down larger carbon molecules to smaller components such as C₁-C₂ hydrocarbons, predominantly methane, H₂ and CO has been performed, usually with a steam component, internally and/or externally by endothermic reaction in catalyst beds of magnesium oxide, nickel, or platinum supported on sintered aluminium, as taught in U.S. Patent Specification No. 5,527,631 (Singh, et al.). Sulphur treatment of sulphur-containing fuel gas was specifically dealt with by Singh, et al., in U.S. Patent Specification No. 5,686,196. There, diesel fuel, having a sulphur content of about 0.5 wt.%, was mixed with hydrogen at low pressure, pressurised, evaporated, and then the mixture passed to a hydrodesulphurizer consisting of a Co-Mo catalyst and a ZnO reactive metal bed, where organic S (that is, sulphur from a sulphur-containing organic compound) was converted to H₂S and then reacted to form ZnS, to reduce sulphur content to levels of about 1.0 ppm - 0.2 ppm. The desulphurized fuel was then passed to a reformer, a condenser, and then to a hydrogen separator made of metallic or polymeric material, preferably Pd-Ag on a nickel support, or a semi-permeable polysulphone hollow fibre membrane. These materials pass the hydrogen through and then back to the diesel fuel/hydrogen mixer, and pass the rejected, reformed fuel to an SOFC. This process was quite complicated and required costly regeneration or disposal of the catalysed-reactive hydrodesulphurization bed.

Other attempts to solve sulphur poisoning of SOFC fuel electrodes were made by Isenberg in U.S. Patent Specification Nos. 4,702,971 and 4,812,329. There, the fuel electrode itself, a nickel particle-cermet structure on the exterior of the SOFC was coated with separate porous, gas-permeable oxygen-ionic-electronic conductor material, such as doped ceria or doped urania, which reduces absorption of sulphur species on the electrode active sites. This process required depositing a delicate 0.5µm to 20µm film and added an extra process step and an additional expense to SOFC costs. Ruka, et al., in U.S. Patent Specification No. 5,021,304 improved the Isenberg coating process, using a separate layer of very small nickel particles as a surface for the doped cerea or doped urania, which made the process even more complicated. What is needed is a process to eliminate the need to apply additional fuel cell layers to the external electrode. Also, replenishing sulphur sorbent, from 6 to 12 times a year, can be very expensive in a commercial process, so there is a need for improved sorbents or other means to reduce these costs.

GB2281077 describes reforming a gas stream by subjecting it to a membrane separation process, combusting the permeate stream, desulphurising the impermeate stream, adding steam, then reforming over a steam reforming catalyst.

Therefore, it is an object of this invention to reduce costs in the step of desulphurization and replacement or regeneration of sulphur sorbent catalyst beds. It is another main object to reduce or eliminate the necessity of using sulphur tolerant layers on exterior fuel electrodes of SFOC's.

These and other objects of the invention are accomplished by a process to desulphurize sulphur-containing fuel gas comprising the steps: (1) providing a main feed stream of sulphur-containing fuel gas containing a first concentration of odorous sulphur compounds; then (2) extracting part of the main stream of sulphur-containing fuel gas to thereby derive a supply feed stream of the sulphur-containing fuel gas at a first pressure; then (3) compressing the gas of the supply feed stream to a second pressure, higher than the first pressure, then (4) passing the compressed feed stream to a sulphur-selective membrane, where the gas is separated into a sulphur-concentrated stream, and a sulphur-lean stream containing a second concentration of sulphur compounds, the second concentration being lower than the first concentration; then (5) passing the sulphur-concentrated stream back to the main feed stream downstream from a point of extraction of the supply feed stream; then (6) passing the sulphur-lean stream through a sulphur-sorbent medium to collect sulphur, thereby providing an essentially sulphur-free stream containing a third concentration of sulphur compounds, the third concentration being lower than each of the first concentration and the second concentration; and supplying the essentially sulphur-free stream to a fuel cell for use as feed fuel.

The method may further comprise the step of reforming the essentially sulphur-free stream prior to passing it to contact a fuel cell. The step of reforming may comprise breaking down larger carbon-containing molecules to smaller components such as C₁ or C₂ hydrocarbons, predominantly methane, H₂ and CO.

The main feed stream may be a stream of natural gas.

The odorous sulphur compounds may be selected from the group consisting of mercaptans, sulphides, and thiophenes and mixtures thereof. In particular, the odorous sulphur compounds may be selected from the group consisting of tertiary butyl mercaptan, dimethyl sulphide, tetrahydrothiophene and mixtures thereof.

In particular, the essentially sulphur-free stream may be supplied to an axially-elongated solid oxide fuel cell.

The method may further comprise the step of measuring a gas flow of the sulphur-lean stream prior to its passage through the sulphur-sorbent medium.

The second pressure is preferably over 304 kPa, more preferably between 304 kPa and 20670 kPa. The third concentration is preferably no more than 0.10 ppm, more preferably between about 0.025 ppm and about 0.075 ppm. The first concentration is preferably at least 0.30 ppm. The second concentration is preferably no more than 0.20 ppm.

The method may further comprise the step of reducing the gas pressure of the sulphur-lean stream prior to its passage through the sulphur-sorbent medium.

The desulphurization process according to the present invention allows the sulphur sorbent medium to run substantially longer than in known processes before the adsorbent bed becomes exhausted. The desulphurization process according to the present invention may allow the sulphur sorbent medium to run approximately 20 times as long as in known processes before the adsorbent bed becomes exhausted.

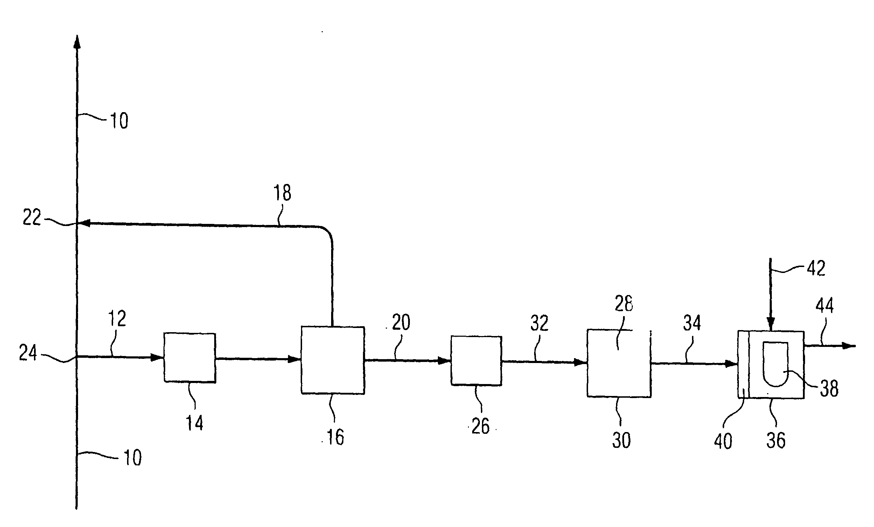

The above and other objects, characteristics and advantages of this invention will be more apparent from the following description in view of the sole drawing Figure, which is a schematic flow diagram of one embodiment of the method of this invention.

Reference will now be made to the drawing Figure, which schematically illustrates operating a fuel cell system comprising oxidant and fuel sources, pumping apparatus, heating apparatus, desulphurization apparatus, reforming apparatus, fuel cell generator apparatus, and the like. Main feed stream 10 contains a sulphur-containing fucl gas with at least 0.30 ppm, usually 0.50 ppm to 25 ppm, of odorous sulphur compounds. In some instances, if natural gas, this stream can contain as high as 30 vol. % odorous sulphur compounds. While H₂S can be present in major amounts and is only mildly odorous, it is still considered an odorous material. Sulphur-containing stenches, such as tertiary butyl mercaptan [(CH₃)₃CSH], dimethyl sulphide [CH₃SCH₃] and tetrahydrothiophene [C₄H₈S] are added to natural gas by commercial natural gas utilities. These stenches are added to permit detection in the event of a leak. The stenches named are not the only ones present in natural gas, but are the most commonly used ones. This invention applies to any sulphur-containing compound that may be present in a gas feed for an SOFC generator. Additional possible sulphur compounds are discussed later when describing the sulphur selective membrane. As mentioned previously, evaporated sulphur- and hydrogen-containing diesel fuel, or coal gas fuel can also be used as the main fuel feed stream 10. A portion of the main fuel feed stream is passed via stream 12 to a pump, compressor or the like 14 to compress the fuel feed to a pressure effective to operate the sulphur selective membrane 16, usually over 304 kPa (kilo Pascals; 44 psi or 3 atmospheres), preferably from 304 kPa to 20670 kPa (44 psi to 3000 psi).

The membrane separation apparatus may contain any type of porous membrane which will selectively separate sulphur compounds from hydrocarbon compounds, such as methane, ethane, propane, butane, and the like, either by allowing the sulphur compounds through its pores while not allowing the carbon compounds through its pores or by allowing the carbon compounds through its pores while not allowing the sulphur compounds through its pores. A variety of membranes are useful. For example, membranes made of silicone capillary fibres, such as polydimethylsiloxane silicone copolymer fibres, as described in U.S. Patent Specification No. 3,534,528 (Porter), There, 30 vol. % H₂S was separated from a natural gas stream containing 70 vol. % of methane at 2000 psi (13780 kPa), by passing through the walls of the membrane. This patent also provides a general description of a wide variety of other useful sulphur selective membranes, for example, C₂-C₄ polyolefins, such as C₂-C₄ polyethylene and polypropylene; polyamides such as nylon; acrylic resins; butyl rubbers; cellulose ethers; and cellulose esters. The membranes selected would depend on the content to be separated and its solubility in the membrane. Block copolymer membranes useful to separate SO₂, H₂S and SO₃ were described in U.S. Patent Specification No. 3,653,180 (Juliano, et al.). This patent described sulphur-selective membranes containing poly (oxyethylene) glycol carbonate segments in polycarbonate chains.

Cooley, et al., in U.S. Patent Specification No. 4,130,403, taught removing H₂S and CO₂ from a natural gas stream, containing hydrocarbons with up to 8 carbon atoms, utilising dried cellulose ester membranes. The separation was due to molecular interaction between the various gaseous components of the feed stream and the membrane, where, because different components react differently with the membrane, the transmission rates (permeation fluxes) were different for each component. Other patents in the sulphur selective membrane technology area include U.S. Patent Specification Nos. 4,608,060, relating to multicomponent membranes such as polyethyleneglycol and silicon rubber composited on polysulphone, 5,487,774 relating to ceramic membranes fabricated from metal sols and having mean pore diameters between 5 Angstrom Units to 20 Angstrom Units (0.5nm - 2.0nm) (Kulprathipanja, et al., and Peterson, et al., respectively).

Passage into the sulphur selective membrane apparatus 16 provides a sulphur-concentrated stream 18, and a sulphur-lean stream 20, where stream 20 preferably contains no more than 0.20 ppm of sulphur compounds. The sulphur-concentrated stream 18 is then passed back to the main feed stream 10 at a point 22 downstream from point 24 where the portion 12 was provided for the method of this invention, so that the main feed stream 10 is enriched with odorous sulphur compounds, enhancing gas leak detection. This is also a convenient and efficient way to dispose of the odorous sulphur compounds in stream 18.

At this point, it is useful to meter the flow volume of the sulphur-lean stream 20 in optional gas meter 26. At this point, if the pressure of the lean stream 20 is so high that it could harm the sulphur sorbent medium 28 in sulphur sorbent desulphurizer 30, then a pressure reducing device (not shown) can be installed in stream 20 or stream 32. The optionally metered/depressurised sulphur lean stream 32 then passes through the sulphur sorbent medium 28, to collect sulphur, providing an essentially sulphur free stream 34 preferably containing no more than 0.10 ppm of sulphur compounds. Preferably, stream 34 contains between 0.025 ppm to 0.075 ppm of sulphur compounds that are passed to SOFC unit 36, and sulphur poisoning of the fuel cells is completely prevented, eliminating the need of any sulphur-tolerant coating on the SOFC 38 exterior electrode.

One type of sulphur sorbent medium 28 is described in the previously discussed Singh, et al., Patent Specification No. 5,686,196, where a Co-Mo catalyst on a ZnO reactive bed is used. A ZnO bed could also be used itself, since H₂S, for example, would react with ZnO to form solid ZnS plus water. The ZnS could he discarded or regenerated by removing the sulphur. Other sulphur sorbents useful in this invention as the media 28 include, for example: activated carbon, activated carbon impregnated with copper oxide and commercially available proprietary mixtures of CuO and ZnO with a promoter, solid iron sponge, and the like. Liquid sorbent solutions can also be used, but are not preferred here. Such solutions could include monoethanol amine, and diethanol amine aqueous solutions, which react with H₂S and can be regenerated for further use by heating, as taught in U.S. Patent Specification No. 5,407,466 (Lokhandwala, et al.).

The essentially sulphur-free stream 34 can then be further processed by heating, pressurising, depressurising and the like and then passed to one or more external or internal reforming beds or impregnated silica boards 40 before contact as a fuel with the SOFC 38 along with an oxidant stream 42. Exhaust from the SOFC unit is shown as 44. Reforming media are discussed in detail in the Singh, et al., Patent Specification No. 5,527,631, are well known in the art, and can include for example Ni and/or MgO alumina support structures within the SOFC's, silica pellets impregnated with Ni and/or MgO as a catalyst bed, and the like. The components and operation of the SOFC 38 and SOFC unit 36 are well known and described in detail in the Domeracki Patent Specification No. 5,413,879. Typically, the solid oxide fuel cells comprise a porous air electrode, a gas-tight electrolyte and a fuel electrode. The air electrode may be made of strontium-doped lanthanum manganite. The electrolyte may be made from yttria-stabilized zirconia and covers the entire active length of the air electrode except for a thin strip. This thin strip of the air electrode is covered by a gas tight layer of magnesium-doped lanthanum chromite that forms the cell interconnection. The fuel electrode may be made from nickel-zirconia cermet and covers the electrolyte except in the interconnection area. The solid oxide fuel cells are arranged in an array so that each is electrically connected to the adjacent fuel cells.

An example follows of how the method of this invention would be operated for a process requiring 100 lb m/hr (45.36 kg per hour) of natural gas (90 vol. % methane) at 310 kPa (45 psi) containing 4 ppm H₂S and 2 ppm tertiary butyl mercaptan added as a highly odorous stench gas, where the system also uses an activated carbon sulphur absorbent. When this invention is used, 110 lb m/hr (49.90 kg per hour) of natural gas would be taken from the gas main pipe and 10 lbm/hr (4.54 kg per hour) would be returned to the gas main. The user of natural gas still pays for the same amount of natural gas, 100 lbm/hr (45.36 kg per hour). The sulphur-selective membrane would remove 95% of the sulphur-bearing molecules. The natural gas sent to the SOFC contains a much lower concentration of sulphur bearing odorants. For this example, the concentration would be reduced to 0.025 ppm.

The desulphurization process would run 20 times as long before the adsorbent bed would become exhausted. A monthly adsorbent replacement effort now becomes an action that occurs once every year and half and since sulphur concentration is below 0.10 ppm no modification of the SOFC fuel electrode would be required.

## Claims

1. A method of desulphurizing sulphur-containing fuel gas for use as feed fuel for a fuel cell system, the method comprising the steps of:
(1) providing a main feed stream (10) of sulphur-containing fuel gas containing a first concentration of odorous sulphur compounds; then
(2) extracting part of the main stream (10) of sulphur-containing fuel gas to thereby derive a supply feed stream of the sulphur-containing fuel gas at a first pressure; then
(3) compressing (14) the gas of the supply feed stream to a second pressure, higher than the first pressure, then
(4) passing the compressed feed stream to a sulphur-selective membrane (16), where the gas is separated into a sulphur-concentrated stream (18), and a sulphur-lean stream (20) containing a second concentration of sulphur compounds, the second concentration being lower than the first concentration; then
(5) passing the sulphur-concentrated stream (18) back to the main feed stream downstream (22) from a point of extraction of the supply feed stream; then
(6) passing the sulphur-lean stream through a sulphur-sorbent medium (28) to collect sulphur, thereby providing an essentially sulphur-free stream (34) containing a third concentration of sulphur compounds, the third concentration being lower than each of the first concentration and the second concentration; and,
(7) supplying the essentially sulphur-free stream to a fuel cell (38) for use as feed fuel.

2. The method according to claim 1 further comprising the step of reforming (40) the essentially sulphur-free stream prior to passing it to contact a fuel cell (38).

3. The method according to claim 2 wherein the step of reforming comprises breaking down larger carbon-containing molecules to smaller components such as C₁ or C₂ hydrocarbons, predominantly methane, H₂ and CO.

4. The method of any preceding claim, where the main feed stream (10) is a stream of natural gas.

5. The method of any preceding claim, where the odorous sulphur compounds are selected from the group consisting of mercaptans, sulphides, and thiophenes and mixtures thereof.

6. The method of claim 5, where the odorous sulphur compounds are selected from the group consisting of tertiary butyl mercaptan, dimethyl sulphide, tetrahydrothiophene and mixtures thereof.

7. The method of claim 6, wherein the essentially sulphur-free stream is supplied to an axially-elongated solid oxide fuel cell (38).

8. The method of any preceding claim, further comprising the step of measuring a gas flow of the sulphur-lean stream prior to its passage through the sulphur-sorbent medium.

9. The method of any preceding claim, wherein the second pressure is over 304 kPa.

10. The method of claim 9, wherein the second pressure is between 304 kPa and 20670 kPa.

11. The method of any preceding claim wherein the third concentration is no more than 0.10 parts per million by volume.

12. The method of claim 11, wherein the third concentration is between about 0.025 parts per million by volume and about 0.075 parts per million by volume.

13. The method according to any preceding claim wherein the first concentration is at least 0.30 parts per million by volume.

14. The method according to any preceding claim wherein the second concentration is no more than 0.20 parts per million by volume.

15. The method according to any preceding claim further comprising the step of reducing the gas pressure of the sulphur-lean stream prior to its passage through the sulphur-sorbent medium.

## Patentansprüche

1. Verfahren zur Entschwefelung von schwefelhaltigem, als Speisebrennstoff für ein Brennstoffzellen-System benutztem Brenngas, das folgende Schritte beinhaltet:
(1) Bereitstellung eines Hauptspeisestroms (10) mit schwefelhaltigem Brenngas, das eine erste Konzentration stark riechender Schwefelverbindungen enthält; und
(2) Extraktion eines Anteils des Hauptstroms (10) des schwefelhaltigen Brenngases, um so einen Einspeisestrom mit schwefelhaltigem Brenngas mit einem ersten Druck abzuleiten; und
(3) Verdichten (14) des Gases im Einspeisestrom auf einen zweiten Druck, der höher als der erste Druck ist; und
(4) Weiterleiten des verdichteten Speisestroms zu einer schwefelselektiven Membran (16), um das Gas in einem schwefelreichen Strom (18) und einen schwefelarmen Strom (20) zu trennen, der eine zweite Konzentration von Schwefelverbindungen hat, die niedriger als die erste Schwefelkonzentration ist; und
(5) das Zurückleiten des schwefelreichen Stroms (18) zum Hauptspeisestrom stromabwärts (22) vom Extraktionspunkt des Einspeisestroms; und
(6) das Weiterleiten des schwefelarmen Stroms durch ein Schwefelsorptionsmedium (28), das den Schwefel aufnimmt, so dass ein im Wesentlichen schwefelfreier Strom (34) gewonnen wird, der eine dritte Konzentration an Schwefelverbindungen hat, wobei diese niedriger als die erste und die zweite Schwefelkonzentration ist;
(7) das Einspeisen des im Wesentlichen schwefelfreien Stroms als Speisebrennstoff in eine Brennstoffzelle (38).

2. Verfahren nach Anspruch 1, das zusätzlich den Schritt des Reformierens (40) des im Wesentlichen schwefelfreien Stroms beinhaltet, bevor er in Kontakt mit einer Brennstoffzelle (38) gebracht wird.

3. Verfahren nach Anspruch 2, **dadurch gekennzeichnet, dass** der Reformierschritt das Aufspalten großer kohlenstoffhaltiger Moleküle in kleinere Komponenten wie in kleinere Komponenten wie C₁₋ oder C₂₋ Kohlenwasserstoffe, überwiegend Methan, H₂ und CO beinhaltet.

4. Verfahren nach einem der vorhergehenden Ansprüche, **dadurch gekennzeichnet, dass** der Hauptspeisestrom (10) ein Erdgasstrom ist.

5. Verfahren nach einem der vorhergehenden Ansprüche, **dadurch gekennzeichnet, dass** die stark riechenden Schwefelverbindungen aus einer Gruppe ausgewählt werden, die aus Merkaptanen, Sulfiden und Thiophenen sowie Mischungen dieser Verbindungen besteht.

6. Verfahren nach Anspruch 5, **dadurch gekennzeichnet, dass** die stark riechenden Schwefelverbindungen aus einer Gruppe ausgewählt werden, die aus tertiärem Butylmerkaptan, Dimethylsulfid und Tetrahydrothiophen sowie Mischungen dieser Verbindungen besteht.

7. Verfahren nach Anspruch 6, **dadurch gekennzeichnet, dass** der im Wesentlichen schwefelfreie Strom in eine in Längsrichtung gestreckte SOFC-Brennstoffzelle (38) gespeist wird:

8. Verfahren nach einem der vorhergehenden Ansprüche, das zusätzlich den Schritt des Messens des Gasdurchsatzes im schwefelarmen Stroms beinhaltet, bevor dieses durch das Schwefelsorptionsmedium geleitet wird.

9. Verfahren nach einem der vorhergehenden Ansprüche, **dadurch gekennzeichnet, dass** der zweite Druck über 304 kPa liegt.

10. Verfahren nach Anspruch 9, **dadurch gekennzeichnet, dass** der zweite Druck zwischen 304 kPa und 20670 kPa liegt.

11. Verfahren nach einem der vorhergehenden Ansprüche, **dadurch gekennzeichnet, dass** die dritte Konzentration höchstens 0,10 Vol.-ppm beträgt.

12. Verfahren nach Anspruch 11, **dadurch gekennzeichnet, dass** die dritte Konzentration zwischen ca. 0,025 und ca. 0,075 Vol.-ppm liegt.

13. Verfahren nach einem der vorhergehenden Ansprüche, **dadurch gekennzeichnet, dass** die erste Konzentration mindestens 0,30 Vol.-ppm beträgt.

14. Verfahren nach einem der vorhergehenden Ansprüche, **dadurch gekennzeichnet, dass** die zweite Konzentration höchstens 0,20 Vol.-ppm beträgt.

15. Verfahren nach einem der vorhergehenden Ansprüche, das zusätzlich den Schritt der Reduzierung des Gasdrucks des schwefelarmen Gasstroms beinhaltet, bevor dieser durch das Schwefelsorptionsmedium geleitet wird.

## Revendications

1. Procédé de désulfuration de gaz combustible sulfuré à utiliser comme combustible d'alimentation d'un système de pile à combustible, le procédé comprenant les étapes consistant à :
(1) fournir un flux de conduite principale (10) de gaz combustible sulfuré contenant une première concentration de composés sulfurés odorants ; puis à
(2) extraire une partie du flux principal (10) de gaz combustible sulfuré pour dériver ainsi un flux de conduite d'alimentation en gaz combustible sulfuré à une première pression ; puis à
(3) comprimer (14) le gaz du flux de conduite d'alimentation à une seconde pression, plus élevée que la première pression ; puis à
(4) amener le flux d'alimentation comprimé à une membrane de séparation sélective du soufre (16) où le gaz est séparé en un flux concentré en soufre (18) et en un flux pauvre en soufre (20) contenant une deuxième concentration de composés sulfurés, la deuxième concentration étant plus basse que la première concentration ; puis à
(5) ramener le flux concentré en soufre (18) dans le flux de conduite principale en aval (22) d'un point d'extraction du flux de conduite d'alimentation ; puis à
(6) faire passer le flux pauvre en soufre dans un milieu sorbant le soufre (28) pour recueillir le soufre, procurant ainsi un flux autant dire exempt de soufre (34) contenant une troisième concentration de composés sulfurés, la troisième concentration étant plus basse à la fois que la première concentration et que la deuxième concentration, et à
(7) amener le flux autant dire exempt de soufre à une pile à combustible (38) pour l'utiliser comme combustible d'alimentation.

2. Procédé selon la revendication 1 comprenant en outre l'étape consistant à reformer (40) le flux autant dire exempt de soufre avant de l'amener en contact avec une pile à combustible (38).

3. Procédé selon la revendication 2 dans lequel l'étape de reformage comprend la dissociation de grandes molécules carbonées en composants plus petits tels que des hydrocarbures C₁ ou C₂, majoritairement du méthane, le H₂ et le CO.

4. Procédé selon l'une quelconque des revendications précédentes, dans lequel le flux de conduite principale (10) est un flux de gaz naturel.

5. Procédé selon l'une quelconque des revendications précédentes, dans lequel les composés sulfurés odorants sont sélectionnés dans le groupe constitué par les mercaptans, les sulfures et les thiophènes, et leurs mélanges.

6. Procédé selon la revendication 5, dans lequel les composés sulfurés odorants sont sélectionnés dans le groupe constitué par le butylmercaptan tertiaire, le diméthylsulfure, le tétrahydrothiophène et leurs mélanges.

7. Procédé selon la revendication 6, dans lequel le flux autant dire exempt de soufre est amené jusqu'à une pile à combustible à oxydes solides allongée axialement (38).

8. Procédé selon l'une quelconque des revendications précédentes, comprenant en outre l'étape consistant à mesurer un débit de gaz du flux pauvre en soufre avant son passage dans le milieu sorbant le soufre.

9. Procédé selon l'une quelconque des revendications précédentes, dans lequel la seconde pression est supérieure à 304 kPa.

10. Procédé selon la revendication 9, dans lequel la seconde pression est située entre 304 kPa et 20 670 kPa.

11. Procédé selon l'une quelconque des revendications précédentes, dans lequel la troisième concentration ne fait pas plus de 0,10 partie par million en volume.

12. Procédé selon la revendication 11, dans lequel la troisième concentration est située entre environ 0,025 partie par million en volume et environ 0,075 partie par million en volume.

13. Procédé selon l'une quelconque des revendications précédentes, dans lequel la première concentration est d'au moins 0,30 partie par million en volume.

14. Procédé selon l'une quelconque des revendications précédentes, dans lequel la deuxième concentration ne fait pas plus de 0,20 partie par million en volume.

15. Procédé selon l'une quelconque des revendications précédentes, comprenant en outre l'étape consistant à réduire la pression du gaz du flux pauvre en soufre avant son passage dans le milieu sorbant le soufre.
